# EUROPÄISCHE PATENTSCHRIFT

(11) **EP 0 427 935 B1**
(45) Veröffentlichungstag und Bekanntmachung des Hinweises auf die Patenterteilung: **24.05.1995**
(21) Anmeldenummer: 90117247.8
(22) Anmeldetag: 07.09.1990
(51) Int. Cl.: A01C 17/00

(54) **Verfahren für den Einsatz eines Schleuderdüngerstreuers**
Method of using a fertilizer broadcaster
Procédé à l'usage d'un epandeur d'engrais centrifuge

(30) Priorität: 03.11.1989 DE 3936633; 24.11.1989 DE 3938921; 09.02.1990 DE 4003945; 27.04.1990 DE 4013532; 26.05.1990 DE 4017026; 28.06.1990 DE 4020574
(43) Veröffentlichungstag der Anmeldung: 22.05.1991
(73) Patentinhaber: Amazonen-Werke H. Dreyer GmbH & Co. KG, D-49205 Hasbergen (DE)
(72) Erfinder: Dreyer, Heinz, Dr. Dipl.-Ing., D-4507 Hasbergen (DE)

(56) Entgegenhaltungen:
- EP-A- 0 158 335
- EP-A- 0 281 885
- EP-A- 0 330 920

## Beschreibung

Die Erfindung betrifft ein Verfahren zum Einsatz eines Schleuderdüngerstreuers gemäß des Oberbegriffes des Patentanspruches 1.

Ein derartiges Verfahren zum Einsatz eines Schleuderdüngerstreuers ist durch die EP-A- 03 30 920 bekannt. Diese Schleuderdüngerstreuer werden zum Ausbringen von insbesondere körnigem oder gekörntem Dünger in der Landwirtschaft eingesetzt. Der Dünger wird aus dem Vorratsbehälter über Dosierelemente den unterhalb der Dosierelemente angeordneten und rotierend angetriebenen Schleuderscheiben zugeführt. Mittels der auf den Schleuderscheiben angeordneten Wurfschaufeln wird der Dünger in Breitverteilung auf dem Boden verteilt.

Nun ist in den letzten Jahren, insbesondere in letzter Zeit, die Forderung immer stärker geworden, beim Bestreuen der Feldrandgrenze den Dünger nicht über die Feldrandgrenzen hinaus auf benachbarte Fläche, insbesondere angrenzende Wege, Gräben bzw. Wasserläufe zu werfen. Hierzu schlägt diese o.a. Druckschrift gemäß Anspruch 9 vor, die beiden relativ langen Normalstreuschaufeln gegen relativ kurz ausgebildete Grenzstreuschaufeln auszutauschen.

Weiterhin ist in dem DE-U-8 606 403 vorgeschlagen worden, die Schleuderscheiben mit den Wurfschaufeln gegen Grenzstreuscheiben mit entsprechenden Grenzstreuschaufeln auszutauschen.

Der hier beschriebene Austausch läßt sich nur bei Schleuderdüngerstreuern anwenden, bei dem die Schleuderscheiben austauschbar sind.

Der Erfindung liegt nun die Aufgabe zugrunde, sämtliche Schleuderdüngerstreuer auf einfache und kostengünstige Weise sowohl für das Normalstreuen wie auch für das Grenzstreuen mit voller Arbeitsbreite ausrüsten zu können.

Diese Aufgabe wird erfindungsgemäß durch das kennzeichende Merkmal des Anspruches 1 gelöst. Infolge dieser Maßnahmen können, auf äußerst einfache Weise möglich, Schleuderdüngerstreuer zum Grenzstreuen ausgerüstet werden, wobei durch den Austausch nur einer Wurfschaufel gegen eine Grenzstreuschaufel der Dünger praktisch mit gleichmäßiger Streustärke bis an den Feldrand herangeworfen wird, ohne daß Düngerpartikel über die Feldrandgrenze gar nicht oder nicht in nennenswerter Weise hinausgeschleudert werden.

Es ist vorgesehen, daß die Wurfschaufeln in Scheibenebene winkelverschwenkbar auf den Schleuderscheiben angeordnet sind, daß in dem Bereich der winkelverschwenkbaren Wurfschaufeln Einstellskalen für die Wurfschaufeln auf den Schleuderscheiben bzw. am Rand der Schleuderscheibe vorgesehen sind. Infolge dieser Maßnahme kann die Grenzstreuschaufeln optimal eingestellt werden, so daß alle Düngersorten beim Einsatz des Schleuderdüngerstreuers mit der Grenzstreuschaufel in gleichmäßiger Weise bis an den Feldrand verteilt werden können. Insbesondere ergibt sich hierdurch der bisher nie erreichte Vorteil, daß der Landwirt je nach seinen Erfordernissen den Dünger mehr oder weniger dicht bis an die Feldrandgrenze heranwerfen kann. Dieses spielt heute im Zeichen einer umweltschonenden Düngerausbringung eine äußerst große Rolle.

Weiterhin ist vorgesehen, daß die Wurfschaufeln gegen sog. Reihenstreuwurfschaufeln austauschbar sind, und daß zum Reihenstreuen eine Reihenstreuvorrichtung an dem Schleuderdüngerstreuer anbringbar ist. Hierdurch wird der Einsatzbereich des Schleuderdüngerstreuers erheblich erweitert. In bevorzugter Weise ist vorgesehen, daß die Grenzstreuschaufeln in Verbindung mit der Reihenstreuvorrichtung einsetzbar sind, so daß die Grenzstreuschaufeln den Dünger über die Reihenstreuvorrichtung gleichmäßig verteilen, so daß der Dünger gleichmäßig in Reihen auf dem Acker auszubringen ist.

Weitere Einzelheiten der Erfindung sind den übrigen Unteransprüchen, der Beispielsbeschreibung und den Zeichnungen zu entnehmen. Hierbei zeigen
- Fig. 1: den in erfindungsgemäßer Weise ausgerüsteten Schleuderdüngerstreuer in Prinzipdarstellung und in der Ansicht von hinten,
- Fig. 2: die rechte Schleuderscheibe des Schleuderdüngerstreuers, wobei sich Wurfschaufeln für das Normalstreuen auf der Schleuderscheibe befinden, in Teilansicht und vergrößertem Maßstab,
- Fig. 3: Prinzipdarstellung der Schleuderscheibe gemäß Fig. 2, in verkleinertem Maßstab, wobei die lange Wurfschaufel gegen eine spezielle Grenzstreuschaufel ausgetauscht ist,
- Fig. 4: die rechte Schleuderscheibe des Schleuderdüngerstreuers, wobei beide Wurfschaufeln als spezielle Grenzstreuschaufeln ausgebildet sind,
- Fig. 5: die rechte Schleuderscheibe des Schleuderdüngerstreuers in Teilansicht und Schnittdarstellung mit der langen Wurfschaufel für das Normalstreuen,
- Fig. 6: die Schleuderscheibe mit der Wurfschaufel gemäß Fig. 5, wobei die von dieser Wurfschaufel abgeschleuderten Düngemittel durch die nach oben gegenüber der Normalstreurichtung gerichtete untere Leitfläche zum Spätdüngen abgeschleudert werden,
- Fig. 7: die rechte Schleuderscheibe des Schleuderdüngerstreuers, wobei die Normalstreuschaufel gegen die speziellle Grenzstreuschaufel ausgetauscht worden ist, wobei sich die Grenzstreuschaufel in Normalstreurichtung befindet und
- Fig. 8: die Schleuderscheibe und die Wurfschaufel gemäß Fig. 7, wobei die untere Leitfläche der Wurfschaufel gegenüber der Normalstreurichtung zum Spätdüngen nach oben gerichtet ist.

Der Schleuderdüngerstreuer weist den Rahmen 1 und den Vorratsbehälter 2 auf. Auf der Vorderseite des Rahmens 1 sind in bekannter und daher nicht näher dargestellter Weise Dreipunktkupplungselemente zum Anbau des Schleuderdüngerstreuers an den Dreipunktkraftheber eines Schleppers angeordnet. Der Vorratsbehälter ist durch das dachförmige Mittelteil 3 in seinem unteren Bereich in die beiden Auslauftrichter 4 und 5 aufgeteilt. Unterhalb der Auslauftrichter 4 und 5 befindet sich jeweils die rotierend angetriebene Schleuderscheibe 6 bzw. 7, die auf den Getriebeausgangswellen 8 des Zahnradgetriebes 9 angeordnet sind und ineinander entgegengesetztem Drehsinn rotierend von einer Kraftquelle, beispielsweise eines Ölmotors oder der Zapfwelle des den Schleuderdüngerstreuer tragenden Schleppers, angetrieben werden. Die Schleuderscheibenantriebswellen 8 sind mittels des jeweiligen Wellenstückes 10, welches auf die Getriebeausgangswellen 8 aufgesetzt ist, durch die sich in der Bodenplatte 11 befindliche Durchtrittsöffnung 12 bis in die jeweilige Auslauftrichterspitze 4 bzw. 5 des Vorratsbehälters 2 hineingeführt. Auf der Oberseite des Wellenstückes 10 ist der Bolzen 13 mit gegenüber dem Wellenstück 10 reduziertem Durchmesser befestigt. Am Ende des Bolzens 13 befindet sich der ebenfalls einen reduzierten Durchmesser aufweisende Schraubbolzen 14. Mit dem Schraubbolzen 14 ist das Rührorgan 15 befestigt.

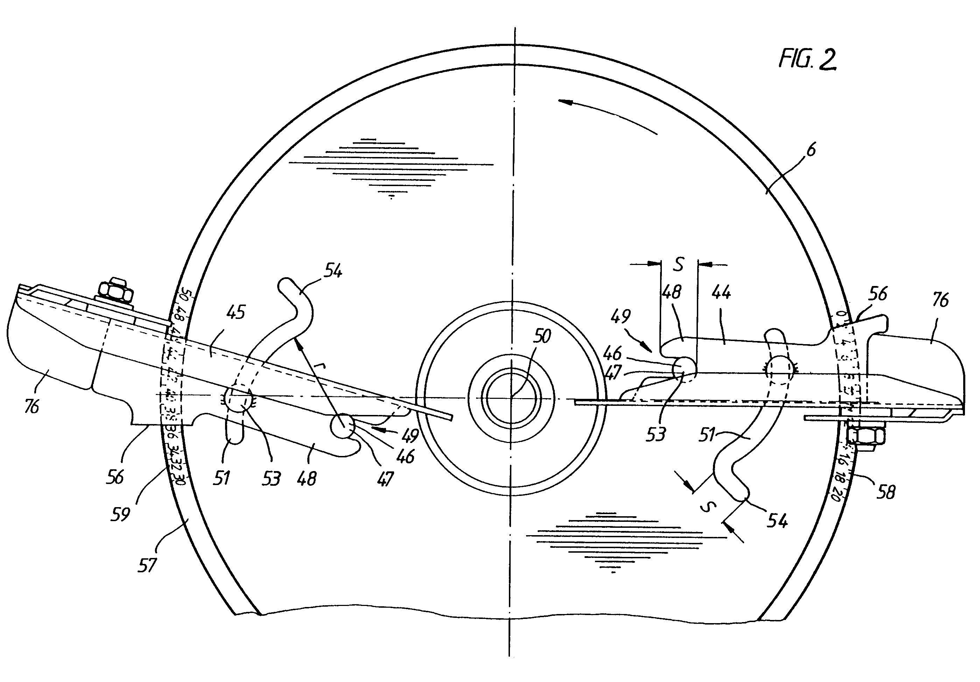

Die sich im Vorratsbehälter 2 befindlichen Düngemittel werden den Schleuderscheiben 6 bzw. 7 über die in unterschiedlichen Öffnungsweiten einstell- und verschließbaren Auslauföffnungen zugeführt. Mittels der auf den Schleuderscheiben 6 bzw. 7 gemäß Fig. 2, wobei nur die rechte Schleuderscheibe 6 dargestellt ist, angeordneten, winkelverschwenkbaren Wurfschaufeln 44 und 45 wird der auf der jeweiligen Schleuderscheibe 6 bzw. 7 auftreffende Düngemittelstrom gleichmäßig über genau einstellbare Arbeitsbreite des Schleuderdüngerstreuers abgeschleudert. Die Wurfschaufel 44 weist eine kürzere Länge als die Wurfschaufel 45 auf, so daß die kürzere Wurfschaufel 44 die Düngemittelpartikel weiter nach innen, also in den inneren Bereich der Arbeitsbreite abschleudert und die längere Wurfschaufel 45 die Düngemittelpartikel weiter nach außen, also in den äußeren Bereich der Arbeitsbreite bzw. Streubreite abschleudert.

Jede Wurfschaufel 44 bzw. 45 ist um den inneren Bolzen 46 verschwenkbar auf der Schleuderscheibe 6 bzw. 7 befestigt. Dieser Bolzen 46 weist einen gegenüber dem Bolzen einen größeren Durchmesser aufweisenden Kopf 47 auf. Auf diesen Bolzen 46 ist die jeweilige Wurfschaufel 44 bzw. 45 mittels des sich im unteren Steg 48 befindlichen, in radialer Richtung verlaufenden Schlitz 49 aufschiebbar. Dieser Schlitz 49 befindet sich auf der der Drehachse 50 zugewandten Seite der Wurfschaufel und ist auf der inneren Seite nach außen offen. Im äußeren Bereich der Wurfschaufel 44 bzw. 45 sind über den Schwenkbereich der Wurfschaufeln 44 bzw. 45 mit dem Radius r gekrümmte Langlöcher 51 angeordnet. Durch diese Langlöcher 51 ist jeweils die mit dieser Knebelschraubenmutter 52 zusammenwirkende Schraube 53 gesteckt, die beispielsweise mit der jeweiligen Wurfschaufel 44 bzw. 45 verschweißt ist. Damit sich nun die um den Bolzen 46 verschwenkbaren Wurfschaufeln 44 bzw. 45 montieren bzw. demontieren lassen, weist das jeweilige Langloch 51 an dem einen Ende des Langloches 51 eine sich immer in radialer Richtung bzw. von der Tangentialen abweichenden Richtung eine Langlochverlängerung 54 auf. Die Länge 1 der Langlochverlängerung 54 entspricht der Schlitzlänge S des sich im unteren Steg befindlichen, in radialer Richtung verlaufenden Schlitzes 49.

Nach dem Lösen der sich auf der Unterseite 55 der Schleuderscheibe 6 bzw. 7 befindlichen Knebelschraubenmutter 52 läßt sich die jeweilige Wurfschaufel 44 bzw. 45 über den durch die Länge des jeweiligen Langloches 51 sich ergebenen Schwenkbereiches zur Anpassung der jeweils vorherrschenden Einsatzbedingungen, d.h., der jeweils auszustreuenden Düngersorte bzw. der gewünschten Arbeitsbreite verschwenken. Hierbei ist der untere Steg 48 als Zeigerelement 56 ausgebildet und wirkt mit der den jeweiligen Wurfschaufeln 44 bzw. 45 zugeordneten, sich auf dem schräg nach unten umgebogenen Rand 57 sich befindlichen Einstellskalen 58 bzw. 59 zusammen. Hierbei ist die Einstellskala 58 der kürzeren Wurfschaufel 44 zugeordnet und weist die Symbole niedrigerer Rangordnung auf, da diese kürzere Wurfschaufel 44 die der jeweiligen Schleuderscheibe 6 bzw. 7 zugeführten Düngemittelpartikel weiter nach innen, also in den inneren Bereich der Arbeitsbreite bzw. Streubreite abschleudern. Die Einstellskala 59 weist die Symbole höherer Rangordnung auf und ist der längeren Wurfschaufel 45 zugeordnet, die die Düngemittelpartikel weiter nach außen, also in den äußeren Bereich der Arbeitsbreite des Schleuderdüngerstreuers abschleudern.

Die Anordnung unterschiedlich langer Wurfschaufeln 44 bzw. 45 auf der jeweiligen Schleuderscheibe 6 bzw. 7 gewährleistet, daß die Düngemittelpartikel gleichmäßig über die gesamte Arbeitsbreite verteilt werden. Die Anstellwinkel der Wurfschaufeln 44 bzw. 45 lassen sich unterschiedlich einstellen, in dem die Wurfschaufeln um den Drehpunkt, der von dem Bolzen 46 gebildet wird, nach Lösen der als Schnellverschluß ausgebildeten Knebelschraubenmutter 52, verschwenkt werden. Um nun bei einer ganz gestimmten Düngersorte unter Berücksichtigung der speziellen Streuguteigenschaften des auszustreuenden Düngers, eine ganz bestimmte Arbeitsbreite mit einer gleichmäßigen Düngerverteilung zu erzielen, ist es erforderlich, daß die Wurfschaufeln 44 bzw. 45 zur Erzeugung eines optimalen Streubildes, ohne Über- oder Unterdüngung einzelner Bereiche, entsprechend eingestellt werden. Aus diesem Grunde sind die Skalen 58 und 59 mit unterschiedlichen Markierungen bzw. Symbolen ausgebildet. hier durch wird gewährleistet, dass die Wurfschaufeln 44 bzw. 45 unverwechselbar einstellbar sind, d.h., es ist nicht möglich, die aus der Streutabelle entnommenen Einstelldaten, die einer ganz bestimmten Wurfschaufel zugeordnet sind, fälschlicher Weise auf eine andere Wurfschaufel zu übertragen.

Soll nun beispielsweise eine ganz bestimmte Düngersorte über eine Streubreite von 16 m verteilt werden, so sind in der Streutabelle für den Schleuderdüngerstreuer, welche zu dem Düngerstreuer mitgeliefert wird, die Einstelldaten für die winkelverschwenkbaren Wurfschaufeln enthalten. Hierfür ist dann in der Streutabelle beispielsweise die Einstellung 2/37 angegeben. D.h., daß die kürzere Wurfschaufel 44 auf den Wert 2 und die längere Wurfschaufel 45 auf den Wert 37 der Einstellskalen 58 bzw. 59 einzustellen sind, wie dies beispielhaft in Fig. 2 dargestellt ist.

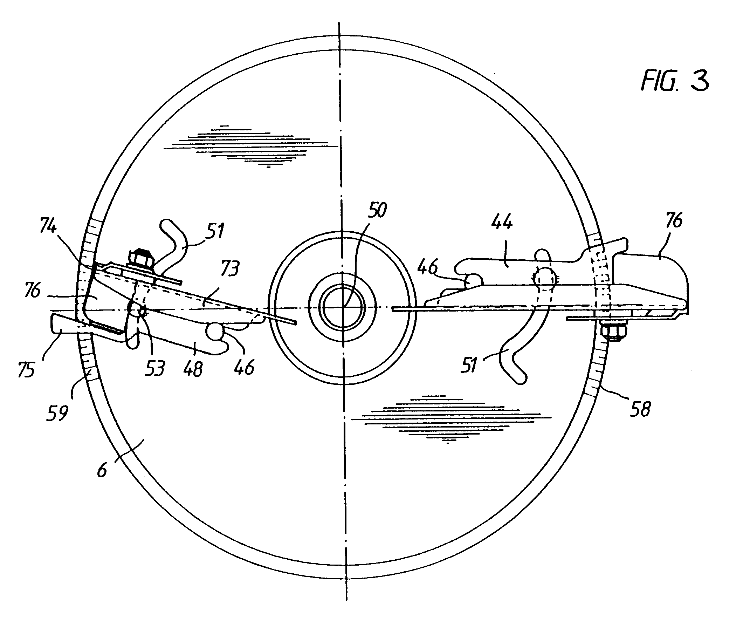

Um den Schleuderdüngerstreuer zum Grenzstreuen einsetzten zu können, wird die lange Wurfschaufel 45 entsprechend Fig. 2 gegen die Grenzstreuschaufel 73 entsprechend Fig. 3 ausgetauscht. Mittels der Grenzstreuschaufel 73, die mit ihrem Abstreuende 74 einen kürzeren Abstand zur Drehachse 50 als die lange Wurfschaufel 45 aufweist, und der kurzen Wurfschaufel 44 wird beim Grenzstreuen ein Streubild mit einer seitlich steil abfallenden Streuflanke erzielt; d.h., daß auf der rechten Seite des Schleuderdüngerstreuers bis zum Feldrand der Dünger mit gleichbleibender Streustärke bis an den Feldrand herangeworfen wird, und daß auf der linken Seite weiterhin ein flach abfallendes Streubild erhalten bleibt. Zum Austausch der langen Wurfschaufel 45 gegen die Grenzstreuschaufel 73 wird die Knebelschraubenmutter 52 auf dem Schraubbolzen 53 gelöst und von dem Schraubbolzen abgenommen. Dann wird die Wurfschaufel 45 ganz zu der Seite des Langloches 51 verschwenkt, auf der sich die Langlochverlängerung 54 befindet. Nun wird die Wurfschaufel 45 nach außen gezogen und anschließend von der Schleuderscheibe 6 abgenommen. Anschließend wird die Grenzstreuschaufel 73 auf der Schleuderscheibe 6 montiert. Nachdem die Knebelschraube 52 auf den Schraubbolzen 53 der Grenzstreuschaufel 73 aufgeschraubt ist, wird die Grenzstreuschaufel 73 in die in der Streutabelle angegebene Position verschwenkt; d.h., mit Hilfe des Zeigers 75 wird die Grenzstreuschaufel 73 auf dem in der Streutabelle angegebenen Wert für die entsprechende Arbeitsbreite eingestellt. Am äußeren Ende der Grenzstreuschaufel 73 ist der Schwenkflügel 76 in aufrechter Ebene verschwenkbar und in zwei Positionen einstellbar angeordnet. Die untere Position ist für die Normaldüngung und die obere Position, wie in Fig. 8 dargestellt, für die Spätdüngung vorgesehen.

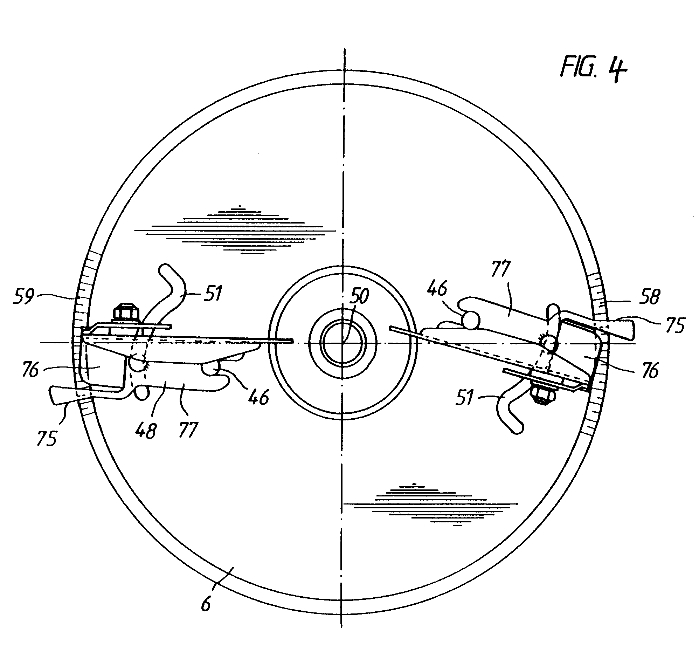

In einem weiteren Ausführungsbeispiel gemäß Fig. 4 werden zum Einsatz des Schleuderdüngerstreuers zum Grenzstreuen die beiden Wurfschaufeln 44 und 45 gemäß Fig. 2 für das Normalstreuen gegen die beiden Grenzstreuschaufeln 77 ausgetauscht. Dieser Austausch geschieht wie bereits für die Grenzstreuschaufel 73 gemäß Fig. 3 beschrieben. Die Grenzstreuschaufeln 77 gemäß Fig. 4 werden auf die gleichen Skalenwerte der Skalen 58 und 59 wie die Normalstreuschaufeln 44 und 45 bei gleicher Arbeitsbreite und Düngersorte eingestellt. Mittels des Schnellverschlusses 52 sind also die Wurfschaufeln 44 und 45 für das Normalstreuen auf einfachste Weise gegen die Grenzstreuschaufeln 77 auswechselbar auf der Schleuderscheibe 6 angeordnet. Auch die Grenzstreuschaufeln 77 weisen an ihrem äußeren Ende jeweils den Schwenkflügel 76 auf, mittels derer sich auf einfache Weise auch beim Spätdüngen das Grenzstreuen (Streubild mit steil abfallender Streuflanke) erreichen läßt. Die Grenzstreuschaufeln 77 gemäß Fig. 4 können auch zum Reihenstreuen in Verbindung mit einer nicht dargestellten Reihenstreuvorrichtung eingesetzt werden. Hierdurch ergibt sich der Vorteil, daß die Düngerpartikel innerhalb der Reihenstreuvorrichtung mit relativ geringer Geschwindigkeit gleichmäßig über die Reihenstreuvorrichtung verteilt werden, so daß sämtlichen Ausläufen der Reihenstreuvorrichtung die gleiche Düngermenge schonend zugeführt wird.

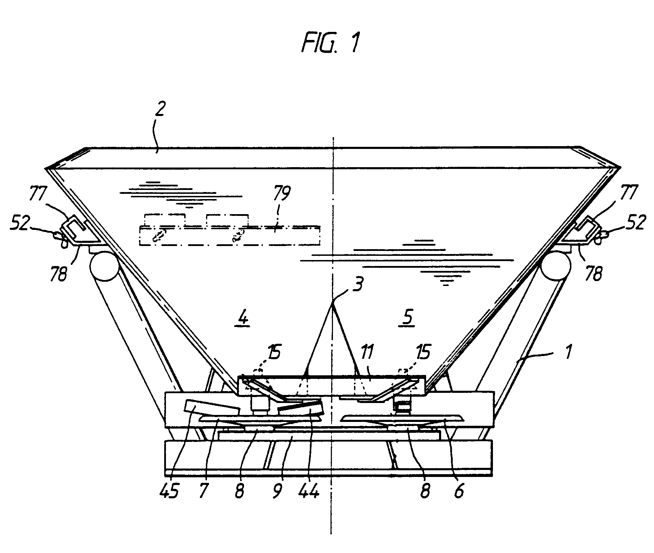

Die nicht benötigten Grenzstreuschaufeln 77 werden beim Normalstreuen, wenn die Streuschaufeln 44 und 45 zum Einsatz kommen, an der Halterung 78 gemäß Fig. 1 mittels des Schnellverschlusses 52 angeordnet. Wenn die Grenzstreuschaufeln 77 zum Einsatz kommen, werden an der Halterung 78 die Normalstreuschaufeln 44 und 45 befestigt und sicher mitgeführt. Anstelle der Halterung 78 kann auch die mit strichpunktierten Linien angedeutete Halterung 79 auf der Rückseite des Schleuderdüngerstreuers an besonders gut zugänglicher Stelle vorgesehen sein. Hierdurch werden die Wechsel-Wurfschaufeln an der Maschine fest gelagert und sind schnell zur Montage auf den Schleuderscheiben 6 und 7 bereit.

Wie bereits vor gesagt, befinden sich auf den Schleuderscheiben 6 und 7 jeweils die Wurfschaufeln 44 und 45 zum Normaldüngen. In Fig. 5 ist die Schleuderscheibe 6 im Schnitt mit der langen Wurfschaufel 45 dargestellt. Hierbei befindet sich der Schwenkflügel 76 der langen Normalstreuschaufel 45 in Normaldüngungsposition. Die Normaldüngungsposition des Schwenkflügels 76 wird durch den Anschlag 80 bestimmt. Um das Spätdüngen durchführen zu können, wird der Schwenkflügel in die Position 76' geschwenkt. Diese Position wird durch den Anschlag 81 bestimmt. Dadurch, daß der Schwenkflügel sich in der Position 76' befindet, wird der Dünger mit einem größeren Abwurfwinkel abgeschleudert, so daß der Streufächer der von den Wurfschaufeln 44 und 45 erzeugt wird, etwas angehoben wird, so daß der Dünger über das bereits hoch aufgewachsene Getreide gleichmäßig verteilt wird. Selbstverständlich werden die Schwenkflügeln bei allen Wurfschaufeln zum Spätdüngen hochgeschwenkt.

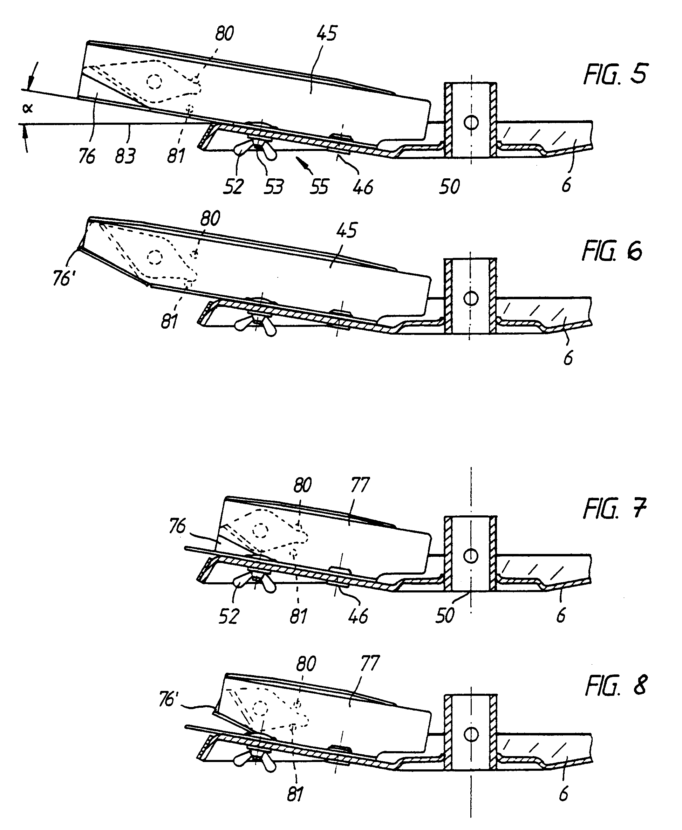

Wenn der Schleuderdüngerstreuer zum Grenzstreuen eingesetzt wird, werden, wie bereits anhand der Fig. 4 beschrieben ist, die Normalstreuschaufeln 44 und 45 gegen die Grenzstreuschaufeln 77 ausgetauscht. Beim Grenzstreuen bei der Normaldüngung befindet sich der Schwenkflügel 76 in der in Fig. 7 dargestellten Position. Diese Position 76 wird durch den Anschlag 80 ebenfalls bestimmt. Wenn das Grenzstreuen beim Spätdüngen durchgeführt wird, wird der Schwenkflügel in die in Fig. 8 dargestellte Position 76' geschwenkt, so daß beim Spätdüngen beim Grenzstreuen ebenfalls der Streufächer anhebbar ist. Bei den Wurfschaufeln 44 und 45 der Schleuderscheibe 7, die zum Feldinneren streut, werden die Schwenkflügel beim Spätdüngen ebenfalls gemäß Fig. 6 in die Position 76' geschwenkt. Die Position 76' wird durch den Anschlag 81 bestimmt.

## Patentansprüche

1. Verfahren zum Einsatz eines Schleuderdüngerstreuers mit einem Rahmen (1) und einem Vorratsbehälter (2), unter dem zumindest zwei rotierend angetriebene Schleuderscheiben (6,7) mit darauf angeordneten Wurfschaufeln angeordnet sind, wobei zumindest für eine der beiden Schleuderscheiben (6,7) austauschbare Wurfschaufeln (73,77) zum Erzielen eines an der seitlichen Streuflanke steil abfallenden Streubildes (sog. Grenzstreuschaufeln) gegen die zum Normalstreuen vorgesehenen Streuschaufeln (44,45,82) unterschiedlicher Länge zum Erzielen eines Streubildes mit seitlich flach abfallenden Streuflanken (sog. Normal-, Breit- oder Standardschaufeln) vorgesehen sind, wobei die Wurfschaufeln (44,45,73,82) mittels eines Schnellverschlusses (52,53) auswechselbar auf den Schleuderscheiben (6,7) angeordnet sind, dadurch gekennzeichnet, daß nur die längere der Normalstreuschaufeln (45) gegen eine kürzere Grenzstreuschaufel (73) ausgetauscht wird, wenn der Schleuderdüngerstreuer zum Grenzstreuen eingesetzt wird.

2. Verfahren nach Anspruch 1, dadurch gekennzeichnet, daß die Grenzstreuschaufeln (73,77) auf die gleichen Skalenwerte wie die Normalstreuschaufeln (44,45,82) bei gleicher Arbeitsbreite und Düngersorte eingestellt werden.

3. Verfahren nach Anspruch 1, dadurch gekennzeichnet, daß die Wurfschaufeln (44,45,73,77,82) gegen sog. Reihenstreuwurfschaufeln austauschbar sind, daß zum Reihenstreuen eine Reihenstreuvorrichtung an dem Schleuderdüngerstreuer anbringbar ist.

4. Verfahren nach einem oder mehreren der vorstehenden Ansprüche, dadurch gekennzeichnet, daß die Grenzstreuschaufeln (73,77) in Verbindung mit der Reihenstreuvorrichtung einsetzbar sind.

5. Verfahren nach einem oder mehreren der vorstehenden Ansprüche, dadurch gekennzeichnet, daß an dem Schleuderdüngerstreuer eine Halterung (78,79) vorgesehen ist, an welcher die nicht zum Einsatz kommenden Streuschaufeln (44,45,73,77,82) leicht zugänglich mitgeführt werden.

6. Verfahren nach einem oder mehreren der vorstehenden Ansprüche, dadurch gekennzeichnet, daß zum Grenzstreuen spezielle Wurfschaufeln (73,77) vorgesehen sind, deren äußeres wurfaktives Ende einen wesentlich kürzeren Abstand zur Drehachse (50) als die Normalstreuschaufeln (44,45,82) aufweisen, und daß diese Grenzstreuschaufeln (73,77) ebenfalls winkelverschwenkbar auf den Schleuderscheiben (6,7) angeordnet sind.

7. Verfahren nach einem oder mehreren der vorstehenden Ansprüche, dadurch gekennzeichnet, daß die Grenzstreuschaufeln (73,77) wesentlich kürzer als die Normalstreuschaufeln (44,45,82) sind, aber derart ausgebildet sind, daß sie mit den Skalen (58,59) zusammenwirken und zwar derart, daß sie auf den gleichen Skalenwert eingestellt werden wie die Normalstreuschaufeln (44,45,82) für die gleiche Düngerart und Arbeitsbreite.

8. Verfahren nach einem oder mehreren der vorstehenden Ansprüche, dadurch gekennzeichnet, daß zum Grenzstreuen nur eine Wurfschaufel (73,77) pro Schleuderscheibe (6,7) eingesetzt wird.

## Claims

1. Method of using a centrifugal fertiliser broadcaster provided with a frame (1) and a hopper (2), beneath which hopper are disposed at least two rotatably driven centrifugal discs (6, 7) having throwing vanes disposed thereon, interchangeable throwing vanes (73, 77) being provided for at least one of the two centrifugal discs (6, 7) to obtain a broadcasting pattern which descends steeply at the lateral broadcasting side (so-called limited broadcasting vanes), said throwing vanes being exchangeable for the broadcasting vanes (44, 45, 82) of variable length, which are provided for normal broadcasting purposes, to obtain a broadcasting pattern with broadcasting sides which descend laterally at a gradual angle (so-called normal, broad or standard vanes), the throwing vanes (44, 45, 73, 82) being disposed on the centrifugal discs (6, 7) so as to be interchangeable by means of a quick-release closure (52, 53), characterised in that only the longer of the normal broadcasting vanes (45) is exchanged for a shorter limited broadcasting vane (73) when the centrifugal fertiliser broadcaster is used for limited broadcasting purposes.

2. Method according to claim 1, characterised in that the limited broadcasting vanes (73, 77) are set to the same calibration values as the normal broadcasting vanes (44, 45, 82) for the same working width and type of fertiliser.

3. Method according to claim 1, characterised in that the throwing vanes (44, 45, 73, 77, 82) are exchangeable for so-called row broadcasting throwing vanes, and in that a row broadcasting device is attachable to the centrifugal fertiliser broadcaster for row broadcasting purposes.

4. Method according to one or more of the preceding claims, characterised in that the limited broadcasting vanes (73, 77) are usable in conjunction with the row broadcasting device.

5. Method according to one or more of the preceding claims, characterised in that a support means (78, 79) is provided on the centrifugal fertiliser broadcaster, and the broadcasting vanes (44, 45, 73, 77, 82), which are not being used, are entrained therewith on said support means in an easily accessible manner.

6. Method according to one or more of the preceding claims, characterised in that special throwing vanes (73, 77) are provided for limited broadcasting purposes, the outer throwing end of said vanes being situated at a substantially shorter distance from the rotary axle (50) than the normal broadcasting vanes (44, 45, 82), and in that these limited broadcasting vanes (73, 77) are also disposed on the centrifugal discs (6, 7) in a angularly pivotable manner.

7. Method according to one or more of the preceding claims, characterised in that the limited broadcasting vanes (73, 77) are substantially shorter than the normal broadcasting vanes (44, 45, 82), but they are so configured that they co-operate with the calibrations (58, 59), i.e. they are so configured that they are set to the same calibration value as the normal broadcasting vanes (44, 45, 82) for the same type of fertiliser and working width.

8. Method according to one or more of the preceding claims, characterised in that only one throwing vane (73, 77) per centrifugal disc (6, 7) is used for limited broadcasting purposes.

## Revendications

1. Procédé d'utilisation d'un distributeur centrifuge d'engrais comprenant un châssis (1) équipé d'un réservoir (2) sous lequel il y a au moins deux disques d'épandage (6, 7) entraîné en rotation et portant des palettes d'éjection, au moins pour l'un des deux disques d'épandage (6,7) il y a des palettes d'éjection échangeables (73,77) pour réaliser une image d'épandage avec un flanc d'épandage latéral chutant brusquement (palette d'épandage en limite de champ) qui peut remplacer les palettes d'épandage (44,45,82) prévues pour l'épandage normal, avec des longueurs différentes pour obtenir une image d'épandage à flanc d'épandage latéral descendant à plat (palette d'épandage normal, large ou standard), les palettes d'éjection (44,45,73,82) pouvant être échangées grâce à un moyen de liaison rapide (52,53) pour être montées sur les disques d'épandage (6,7), procédé caractérisé en ce qu'on remplace la palette d'éjection normale longue (45) par une palette d'éjection en limite (73) courte lorsque l'épandeur centrifuge d'engrais est utilisé pour l'épandage en limite de champ.

2. Procédé selon la revendication 1, caractérisé en ce que les palettes d'épandage en limite de champ (73,77) se règlent sur les mêmes valeurs des échelles que les palettes d'épandage normal (44, 45,82) pour une même largeur de travail et un même type d'engrais.

3. Procédé selon la revendication 1, caractérisé en ce que les palettes d'éjection (44,45,73,77,82) peuvent être remplacées par des palettes d'éjection pour l'épandage en rangée et pour cet épandage, le distributeur centrifuge d'engrais est équipé d'un dispositif d'épandage en rangée.

4. Procédé selon une ou plusieurs des revendications précédentes, caractérisé en ce que les palettes d'épandage en limite (73,77) s'utilisent en combinaison avec le dispositif d'épandage en rangée.

5. Procédé selon une ou plusieurs des revendications précédentes, caractérisé en ce que le distributeur centrifuge d'engrais comporte un moyen de fixation (78,79) permettant de recevoir les palettes d'épandage (44,45,73,77,82) non utilisées pour qu'elles restent facilement accessible et puissent être emportées.

6. Procédé selon une ou plusieurs des revendications précédentes, caractérisé par des palettes d'éjection particulières (73,77) pour l'épandage en limite de champ dont l'extrémité extérieure importante pour l'éjection, est à une distance beaucoup plus courte de l'axe de rotation (50) que l'extrémité des palettes d'épandage normal (44,45,82) et que ces palettes d'épandage en limite (73,77) sont également pivotantes angulairement sur les disques d'épandage (6,7).

7. Procédé selon une ou plusieurs des revendications précédentes, caractérisé en ce que les palettes d'éjection en limite (73,77) sont beaucoup plus courtes que les palettes d'épandage normal (44,45,82) mais sont réalisées pour coopérer avec les échelles (58,59) et cela de manière à pouvoir se régler sur les mêmes valeurs de réglage que les palettes d'épandage normal (44,45,82) pour le même type d'engrais et la même largeur de travail.

8. Procédé selon une ou plusieurs des revendications précédents, caractérisé en ce que pour l'épandage en limite de champ, on n'utilise qu'une palette d'éjection (73,77) par disque d'épandage (6,7).
